# EUROPEAN PATENT APPLICATION

(11) **EP 4 439 827 A1**
(43) Date of publication of application: **02.10.2024**
(21) Application number: 24159862.2
(22) Date of filing: 27.02.2024
(51) Int. Cl.: H01M 50/213, H01M 50/244, H01M 50/262

(54) **BATTERY PACK**

(30) Priority: 27.03.2023 JP 2023050668
(71) Applicant: Murata Manufacturing Co., Ltd., Nagaokakyo-shi, Kyoto 617-8555 (JP)
(72) Inventor: Bannai, Yoshiyuki, Kyoto, 617-8555 (JP)
(74) Representative: Witte, Weller & Partner Patentanwälte mbB

(57) **Abstract**

To improve impact resistance of a battery pack. A battery pack includes a plurality of secondary batteries that are cylindrical, a holder that holds the plurality of secondary batteries, and a case that houses the holder. One of the case and the holder includes a first protruding portion that protrudes along a virtual line extending from one of the case and the holder toward the other of the case and the holder. The other of the case and the holder supports the first protruding portion in a state of being in contact with a distal end portion of the first protruding portion, and includes three or more second protruding portions that are elastically deformable. The three or more second protruding portions surround the first protruding portion in plan view viewed along an extending direction of a virtual line.

## Description

### BACKGROUND OF THE INVENTION

### 1. FIELD OF THE INVENTION

The present disclosure relates to a battery pack.

### 2. DESCRIPTION OF THE RELATED ART

Japanese Patent Application Laid-Open No. 2015-228385 discloses a battery housing case including a case portion that houses a battery holder. The battery housing case is applied to a battery pack including a plurality of cylindrical battery cells (secondary batteries). The battery housing case has a pair of projection portions that elastically deform in response to impact.

As shown in FIG. 4 of Japanese Patent Application Laid-Open No. 2015-228385, the pair of projection portions is disposed along a direction in which the plurality of secondary batteries are arranged. As shown in FIG. 7 of Japanese Patent Application Laid-Open No. 2015-228385, the pair of projection portions is curved such that their end surfaces face each other, and has an inclined portion on an outer peripheral surface. The case portion has a pair of protrusions on an inner side surface. The pair of protrusions is disposed with the pair of projection portions interposed therebetween, and each of the pair of protrusions abuts against the inclined portion of the pair of projection portions. When an impact acts on the battery pack, the pair of projection portions is elastically deformed by the pair of protrusions in response to the impact. As a result, impact resistance of the battery pack can be improved.

### SUMMARY OF THE INVENTION

As described above, the pair of protrusions is disposed with the pair of projection portions interposed therebetween, and when an impact in a direction in which the pair of protrusions are arranged or in a direction from the secondary battery toward the pair of protrusions acts on the battery pack, the pair of projection portions can be elastically deformed by being pressed by the pair of protrusions. However, when an impact acts in a direction along a center axis of the secondary battery, the pair of projection portions is not pressed by the pair of protrusions and is not elastically deformed, and the impact may act on the secondary battery.

The present disclosure has been made in view of the above, and an object of the present disclosure is to improve impact resistance in a battery pack.

A battery pack of the present disclosure includes: a plurality of secondary batteries that are cylindrical; a holder that holds the plurality of secondary batteries; and a case that houses the holder, in which one of the case and the holder includes a first protruding portion that protrudes along a virtual line extending from one of the case and the holder toward the other of the case and the holder, the other of the case and the holder supports the first protruding portion in a state of being in contact with a distal end portion of the first protruding portion, and includes three or more second protruding portions that are elastically deformable, and the three or more second protruding portions surround the first protruding portion in plan view viewed along an extending direction of the virtual line.

According to the present disclosure, impact resistance of the battery pack can be improved.

### BRIEF DESCRIPTION OF THE DRAWINGS

FIG. 1 is an exploded perspective view of a battery pack according to a first embodiment of the present disclosure;
FIG. 2 is an exploded perspective view of a battery unit;
FIG. 3 is a perspective view of a first holder portion as viewed from a -Z side;
FIG. 4 is a sectional view of the battery pack taken along a plane orthogonal to a center axis of a secondary battery;
FIG. 5 is a sectional view of the battery pack taken along a plane including a virtual line and parallel to the center axis of the secondary battery;
FIG. 6 is a plan view of a set of second protruding portions as viewed along an extending direction of the virtual line;
FIG. 7 is a sectional view of the set of second protruding portions taken along line VII-VII illustrated in FIG. 6;
FIG. 8 is a sectional view of a battery pack according to a second embodiment of the present disclosure;
FIG. 9 is a perspective view of a battery unit illustrated in FIG. 8;
FIG. 10 is a perspective view of the set of second protruding portions in the battery pack according to a first modification of the first embodiment of the present disclosure;
FIG. 11 is a perspective view of the set of second protruding portions in the battery pack according to a second modification of the first embodiment of the present disclosure;
FIG. 12 is a perspective view of the set of second protruding portions in the battery pack according to a third modification of the first embodiment of the present disclosure;
FIG. 13 is a perspective view of the set of second protruding portions in the battery pack according to a fourth modification of the first embodiment of the present disclosure;
FIG. 14 is a perspective view illustrating a periphery of the set of second protruding portions in the battery pack according to a fifth modification of the first embodiment of the present disclosure;
FIG. 15 is a sectional view of a first protruding portion and the set of second protruding portions in the battery pack according to a sixth modification of the first embodiment of the present disclosure; and
FIG. 16 is a sectional view illustrating a periphery of the set of second protruding portions in the battery pack according to a seventh modification of the first embodiment of the present disclosure.

### DETAILED DESCRIPTION OF THE INVENTION

Hereinafter, embodiments will be described in detail with reference to the drawings. Note that the present disclosure is not limited to the embodiments. It goes without saying that the embodiments are examples, and partial replacement or combination of the configurations shown in the different embodiments and modifications is possible.

An X direction in the drawings corresponds to a width direction of a battery pack 1, a Y direction corresponds to a depth direction of the battery pack 1, and a Z direction corresponds to a height direction of the battery pack 1. The X direction, the Y direction, and the Z direction are orthogonal to each other. In the X direction, a side indicated by an arrow is defined as a +X side, and a side opposite to the +X side is defined as a -X side. In the Y direction, a side indicated by an arrow is defined as a +Y side, and a side opposite to the +Y side is defined as a -Y side. In the Z direction, a side indicated by an arrow is defined as a +Z side, and a side opposite to the +Z side is defined as a -Z side. Note that the X, Y, and Z directions are examples, and the present disclosure is not limited to these directions.

### <First embodiment>

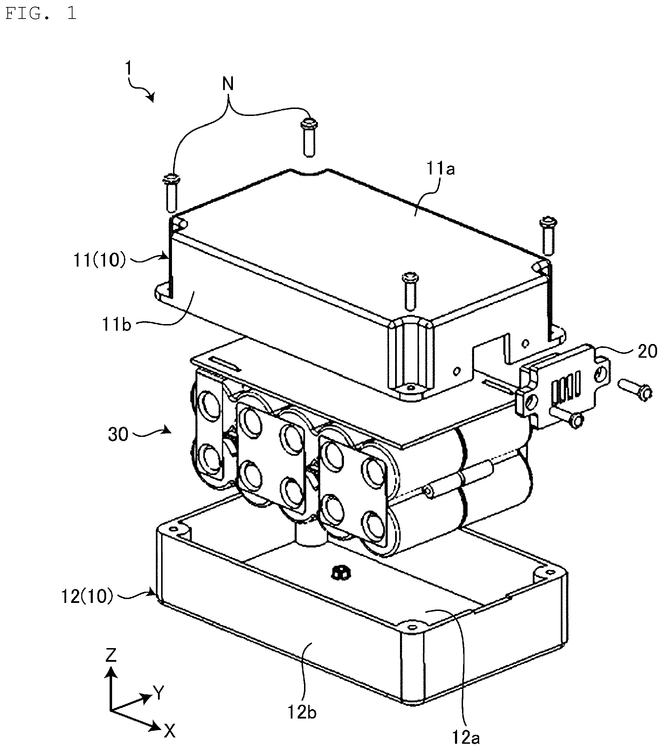

FIG. 1 is an exploded perspective view of the battery pack 1 according to a first embodiment of the present disclosure. The battery pack 1 can be applied as a power source to an external device (not illustrated) such as an electronic device, an electric vehicle, and an electric tool. The battery pack 1 includes a case 10, a connector 20, and a battery unit 30.

The case 10 has a box shape and houses the battery unit 30. The case 10 includes a first case portion 11 and a second case portion 12. The material of the first case portion 11 and the second case portion 12 is a thermoplastic resin. The material of the first case portion 11 and the second case portion 12 is, for example, polycarbonate. The material of the first case portion 11 and the second case portion 12 may be a material containing at least one selected from the group consisting of polycarbonate, polypropylene, polyethylene, polystyrene, acrylonitrile-butadiene-styrene, acrylonitrile-EPDM-styrene, acrylonitrile-styrene, polyethylene terephthalate, polyacetal, polyamide, polybutylene terephthalate, modified polyphenylene ether, polyphenylene sulfide, and liquid crystal polymer.

The first case portion 11 integrally includes an upper wall 11a and four first side walls 11b on a peripheral edge of the upper wall 11a, and has a box shape opening on the - Z side. The second case portion 12 integrally includes a lower wall 12a and four second side walls 12b on a peripheral edge of the lower wall 12a, and has a box shape opening on the +Z side. The first case portion 11 and the second case portion 12 are attached to each other using, for example, a screw N and the like.

The connector 20 is attached to the case 10. The connector 20 electrically connects an external device and the battery unit 30, and supplies (discharges) power of the battery unit 30 to the external device. Furthermore, the connector 20 electrically connects a power supply (for example, a commercial power supply) and the battery unit 30, and supplies (charges) power from the power supply to the battery unit 30.

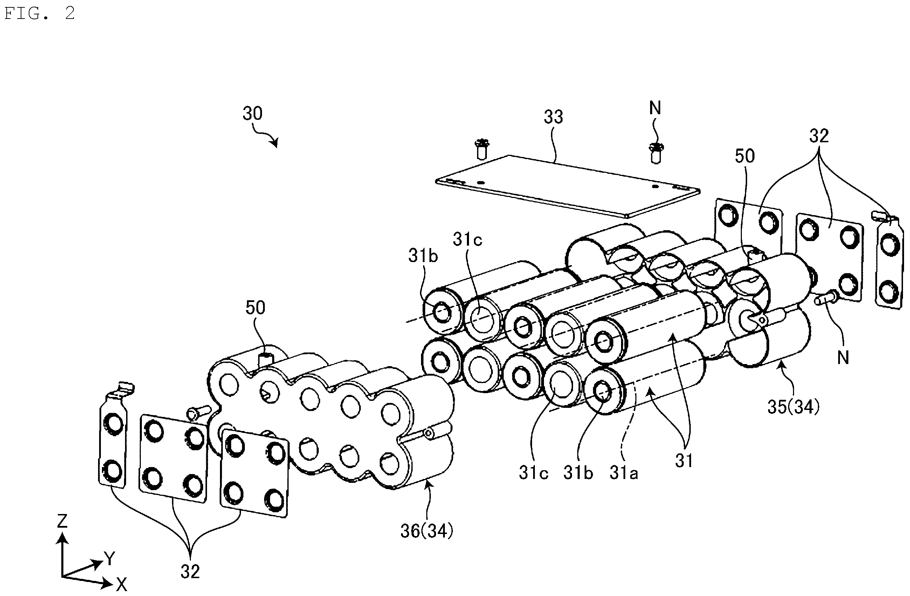

FIG. 2 is an exploded perspective view of the battery unit 30. The battery unit 30 includes a plurality of secondary batteries 31, a lead plate 32, a control board 33, and a holder 34.

The secondary battery 31 is, for example, a lithium ion battery. The secondary battery 31 has a cylindrical shape. The plurality of secondary batteries 31 are arranged in parallel. Specifically, the plurality of secondary batteries 31 are arranged such that the center axis 31a of the plurality of secondary batteries 31 extends along the Y direction.

In the first embodiment, the number of the secondary batteries 31 is 10. Among the plurality of secondary batteries 31, five secondary batteries are arranged along the X direction, and two secondary batteries are arranged along the Z direction. It goes without saying that the number of the secondary batteries 31 and the arrangement of the secondary batteries 31 are not limited to the above number and arrangement. Further, in the plurality of secondary batteries 31, a direction of a positive electrode terminal 31b and a direction of a negative electrode terminal 31c are arranged in a predetermined direction.

The lead plate 32 is electrically connected to the terminal of the secondary battery 31. Specifically, the battery pack 1 has a plurality of the lead plates 32, and each of the plurality of lead plates 32 is electrically connected to the positive electrode terminal 31b and the negative electrode terminal 31c of the secondary battery 31 so that the plurality of secondary batteries 31 are electrically connected in series or in parallel.

The control board 33 is electrically connected to the plurality of secondary batteries 31 with the plurality of lead plates 32 interposed therebetween. The control board 33 controls charging and discharging of the secondary battery 31.

The holder 34 holds the plurality of secondary batteries 31 in a state where the plurality of secondary batteries 31 are arranged in parallel. The holder 34 includes a first holder portion 35 and a second holder portion 36. The material of the first holder portion 35 and the second holder portion 36 is a thermoplastic resin. The material of the first holder portion 35 and the second holder portion 36 is, for example, polycarbonate. The first holder portion 35 holds a first end side (+Y side) of the plurality of secondary batteries 31.

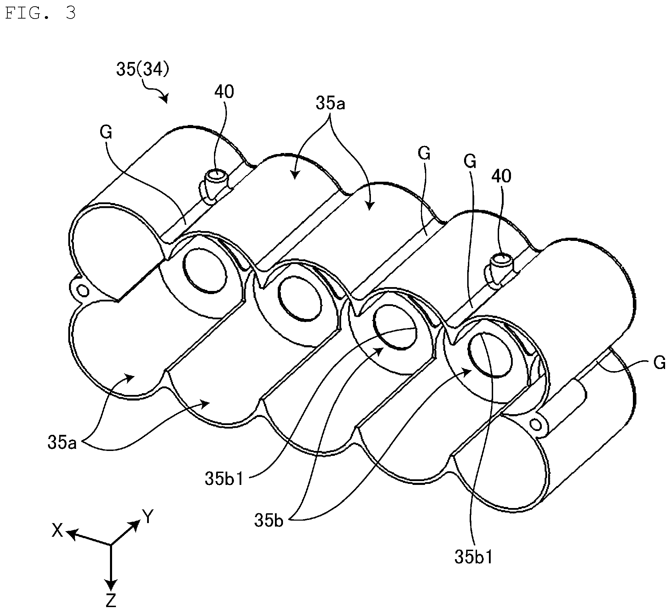

FIG. 3 is a perspective view of the first holder portion 35 as viewed from the -Z side. The first holder portion 35 integrally includes a plurality of peripheral side walls 35a having an arcuate cross section and a plurality of end walls 35b facing the positive electrode terminals 31b and the negative electrode terminals 31c of the plurality of secondary batteries 31.

The plurality of peripheral side walls 35a are arranged corresponding to the arrangement of the plurality of secondary batteries 31. That is, the number of peripheral side walls 35a is ten. Among the plurality of peripheral side walls 35a, five peripheral side walls are arranged along the X direction, and two peripheral side walls are arranged along the Z direction.

The end wall 35b has a plurality of through holes 35b1. The positive electrode terminal 31b and the negative electrode terminal 31c of the secondary battery 31 are electrically connected to the lead plate 32 through the through hole 35b1.

With the arrangement of the plurality of peripheral side walls 35a, the outer surface of the first holder portion 35 includes a plurality of groove portions G extending along the center axis 31a (Y direction) of the secondary battery 31. Furthermore, with the arrangement of the plurality of peripheral side walls 35a, the plurality of groove portions G are located in parallel along the X direction.

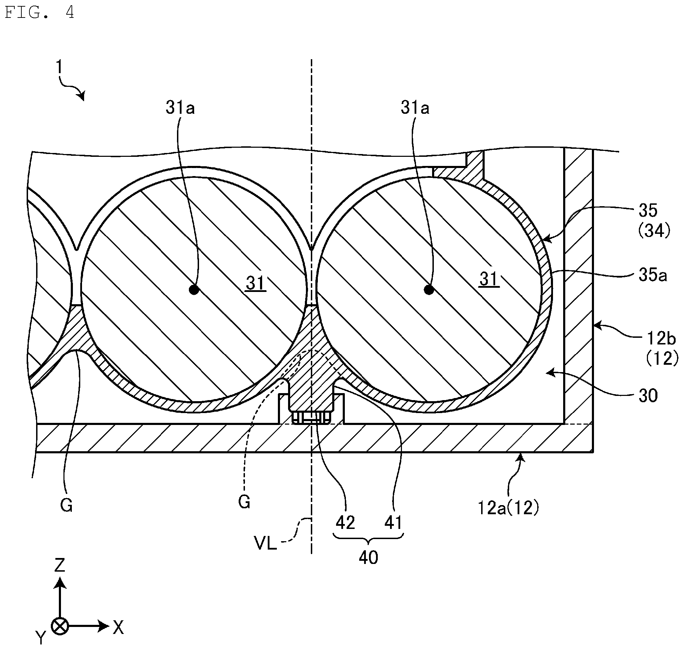

FIG. 4 is a sectional view of the battery pack 1 taken along a plane orthogonal to the center axis 31a of the secondary battery 31. The first holder portion 35 integrally includes a first protruding portion 40. The first protruding portion 40 protrudes along a virtual line VL extending from the first holder portion 35 toward the lower wall 12a of the second case portion 12. Specifically, the first protruding portion 40 is located on an outer surface of the holder 34 facing the lower wall 12a, and protrudes toward the lower wall 12a along the virtual line VL. The virtual line VL is orthogonal to the center axis 31a of the secondary battery 31 and parallel to the Z direction. It goes without saying that the virtual line VL is not limited to being parallel to the Z direction.

The first protruding portion 40 has a columnar shape with the virtual line VL as the center axis. The first protruding portion 40 has a peripheral side surface 41 extending along the virtual line VL and an end surface 42 orthogonal to the virtual line VL. A peripheral edge portion of the end surface 42 has an arcuate sectional shape.

As illustrated in FIG. 3, the first holder portion 35 includes a plurality of (specifically, two) first protruding portions 40. The two first protruding portions 40 are located at bottoms of the groove portions G at both ends in the X direction among the plurality of groove portions G arranged in parallel along the X direction. With the arrangement of the plurality of peripheral side walls 35a, the bottom of the groove portion G and the first protruding portion 40 are located between the center axes 31a of the two secondary batteries 31 adjacent to each other in a parallel direction (the X direction in the first embodiment) of the secondary battery 31 in plan view viewed along the extending direction of the virtual line VL (parallel to the Z direction in the first embodiment) (see FIG. 4). As described above, since the first protruding portion 40 is located at the bottom of the groove portion G, the height of the holder 34 in the Z direction can be reduced as compared with a case where the first protruding portion 40 is located at a position overlapping the center axis 31a of the secondary battery 31 in plan view along the virtual line VL, and the battery pack 1 can be downsized.

The second holder portion 36 holds a second end side (-Y side) of the plurality of secondary batteries 31. The second holder portion 36 has the same shape as the first holder portion 35. The second holder portion 36 includes the two first protruding portions 40. Thus, the holder 34 includes the four first protruding portions 40. It goes without saying that the number of the first protruding portions 40 of the first holder portion 35 and the second holder portion 36 is not limited to two. The first holder portion 35 and the second holder portion 36 are attached to each other using, for example, a screw and the like.

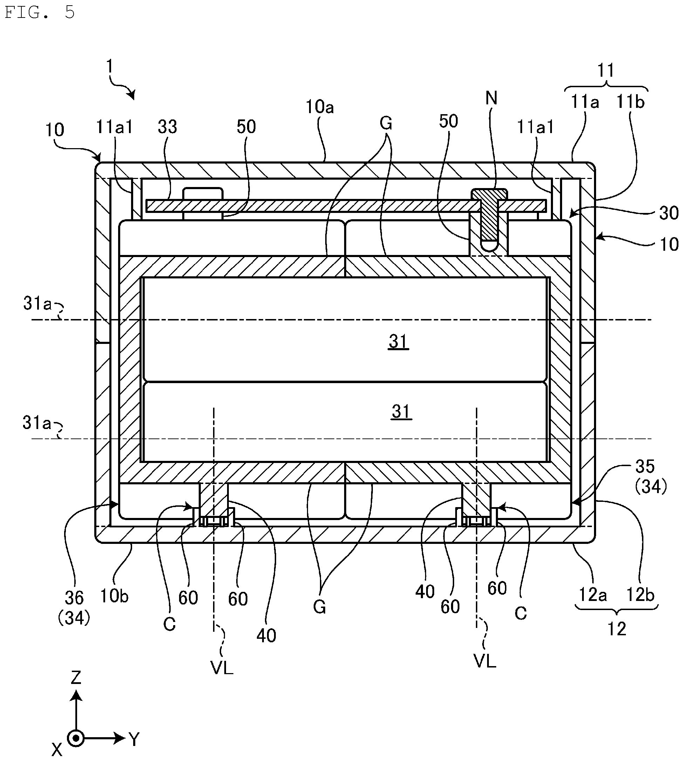

FIG. 5 is a sectional view of the battery pack 1 taken along a plane including the virtual line VL and parallel to the center axis 31a of the secondary battery 31. Note that, in FIG. 5, the lead plate 32 is omitted.

As illustrated in FIGS. 2 and 5, the first holder portion 35 and the second holder portion 36 integrally include an attachment portion 50 to which the control board 33 is attached. The attachment portion 50 has a columnar shape and is located at the bottom of the groove portion G on the outer surface of the holder 34 facing the upper wall 11a. That is, the attachment portion 50 and the first protruding portion 40 are located on opposite sides of the secondary battery 31. The control board 33 is attached to the holder 34 with the attachment portion 50 interposed therebetween, using, for example, the screw N and the like. In this manner, the control board 33 is attached to a portion of the holder 34 facing the upper wall 11a.

As illustrated in FIG. 5, the first case portion 11 is disposed on the upper wall 11a and integrally includes a pair of plate portions 11a1 in contact with the holder 34. The pair of plate portions 11a1 is in contact with the holder 34 on the opposite side of the first protruding portion 40 with the secondary battery 31 interposed therebetween. The pair of plate portions 11a1 is located on both sides with the control board 33 interposed therebetween, and has a plate shape extending in the parallel direction (X direction) of the secondary battery 31. The pair of plate portions 11a1 is in contact with the outer surface of the holder 34 facing the upper wall 11a.

The second case portion 12 is disposed on the lower wall 12a and integrally includes a set of second protruding portions C including a plurality of second protruding portions 60 that supports the first protruding portion 40 in a state of being in contact with a distal end portion of the first protruding portion 40. The number of the set of second protruding portions C is equal to the number of the first protruding portions 40 (four in the first embodiment). The position of the set of second protruding portions C corresponds to the position of the first protruding portion 40.

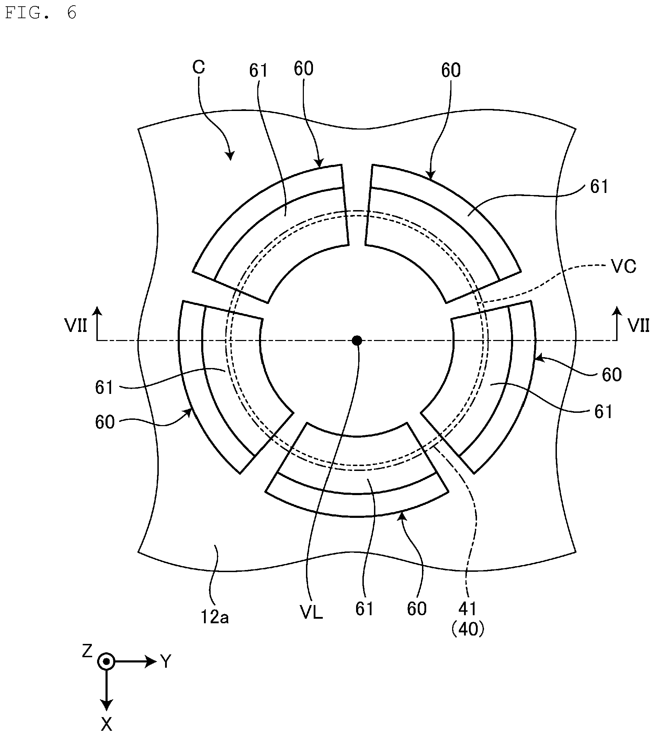

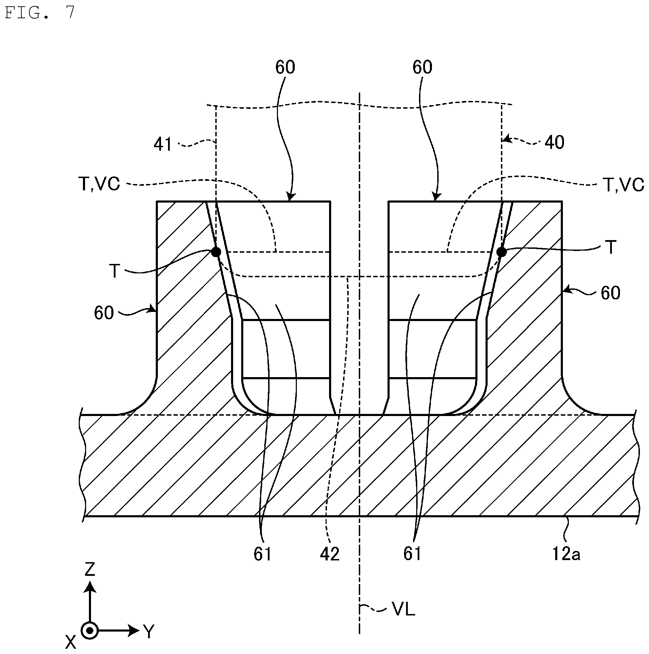

FIG. 6 is a plan view of the set of second protruding portions C as viewed along the extending direction of the virtual line VL. FIG. 7 is a sectional view of the set of second protruding portions C taken along line VII-VII illustrated in FIG. 6. In the set of second protruding portions C, the number of the second protruding portions 60 is three or more. In the first embodiment, the number of the second protruding portions 60 included in the set of second protruding portions C is an odd number, that is, five.

As illustrated in FIG. 6, the plurality of second protruding portions 60 included in the set of second protruding portions C surround the first protruding portion 40 and are located in mutually different radial directions about the virtual line VL in plan view viewed along the extending direction of the virtual line VL. The radiation direction is a direction away from the virtual line VL in plan view viewed along the extending direction of the virtual line VL. The plurality of second protruding portions 60 are arranged at equal intervals in a peripheral direction of a virtual circle VC centered on the virtual line VL in plan view viewed along the extending direction of the virtual line VL. A distance between the two second protruding portions 60 adjacent to each other along a circumferential direction of the virtual circle VC among the plurality of second protruding portions 60 is smaller than a diameter of the first protruding portion 40. The plurality of second protruding portions 60 have the same shape.

As illustrated in FIGS. 6 and 7, the second protruding portion 60 protrudes from the lower wall 12a along the virtual line VL. The sectional shape of the second protruding portion 60 when cut along a plane orthogonal to the virtual line VL is an arc shape. The second protruding portion 60 has an inclined surface 61 on the distal end side (protruding end side). The inclined surface 61 is a surface inclined in the direction in which the inclined surface 61 is increasingly away from the virtual line VL from the proximal end side toward the distal end side of the second protruding portion 60.

The inclined surface 61 is in contact with a peripheral edge portion of the distal end portion of the first protruding portion 40. Specifically, the inclined surface 61 is in contact with a peripheral edge portion of the end surface 42 of the first protruding portion 40. The inclined surface 61 has a curved surface shape along the peripheral edge portion of the end surface 42. In this case, the peripheral edge portion of the end surface 42 of the first protruding portion 40 and the inclined surface 61 are in surface contact or line contact with each other. The inclined surface 61 may be a flat surface. In this case, the peripheral edge portion of the end surface 42 of the first protruding portion 40 and the inclined surface 61 are in point contact with each other. A contact portion T of the inclined surface 61 in contact with the distal end portion of the first protruding portion 40 is located on the same virtual circle VC in plan view viewed along the extending direction of the virtual line VL.

The second protruding portion 60 is elastically deformable. The second protruding portion 60 is elastically deformed such that the distal end of the second protruding portion 60 is bent in the direction away from the virtual line VL and a direction approaching the virtual line VL in a state where the proximal end of the second protruding portion 60 is fixed. In other words, the second protruding portion 60 is elastically deformed such that the distal ends of the plurality of second protruding portions 60 are bent in directions approaching each other and in directions separating from each other in the state where the proximal end of the second protruding portion 60 is fixed.

The second protruding portion 60 in a deformed (elastically deformed) state supports the first protruding portion 40. That is, the inclined surface 61 and the first protruding portion 40 are in contact with each other in a state where the second protruding portion 60 is elastically deformed. Specifically, the second protruding portion 60 supports the first protruding portion 40 in a state where the distal end of the second protruding portion 60 is elastically deformed in the direction away from the virtual line VL as compared with a state where the first protruding portion 40 is not supported. As illustrated in FIG. 5, the pair of plate portions 11a1 is in contact with the outer surface of the holder 34 facing the upper wall 11a. On the other hand, the first protruding portion 40 is located on the outer surface of the holder 34 facing the lower wall 12a. As a result, in a state where the holder 34 is housed in the case 10, the pair of plate portions 11a1 presses the holder 34, and the first protruding portion 40 presses the pair of second protruding portions C. That is, the plurality of second protruding portions 60 are bent by being pressed by the first protruding portion 40.

By supporting the first protruding portion 40 in a state where the second protruding portion 60 is in contact with the distal end portion of the first protruding portion 40 in this manner, it is possible to suppress generation of abnormal noise caused by contact or separation between the first protruding portion 40 and the second protruding portion 60. Since the second protruding portion 60 in the deformed state supports the first protruding portion 40, the second protruding portion 60 and the distal end portion of the first protruding portion 40 can be reliably brought into contact with each other when there is an individual difference (so-called dimensional variation) in sizes of the holder 34 and the case 10. The second protruding portion 60 in an undeformed (elastically undeformed) state may support the first protruding portion 40.

Next, the operation of the battery pack 1 when an impact acts on the battery pack 1 will be described. When the battery pack 1 falls and hits a floor surface, for example, an impact acts on the battery pack 1.

First, a case where the Z direction and the vertical direction coincide with each other, the battery pack 1 falls in a posture in which a top surface 10a of the case 10 (that is, the outer surface of the upper wall 11a: the outer surface on the +Z side of the case 10 (see FIG. 5)) faces the opposite side to the floor surface, and a bottom surface 10b of the case 10 (that is, the outer surface of the lower wall 12a: the outer surface on the -Z side of the case 10 (see FIG. 5)) hits the floor surface will be described.

In this case, when the battery pack 1 hits the floor surface, the battery unit 30 approaches the lower wall 12a in the Z direction, that is, along the virtual line VL. At this time, the first protruding portion 40 presses all the inclined surfaces 61 of the plurality of second protruding portions 60 along the virtual line VL. As a result, each of the plurality of second protruding portions 60 is elastically deformed such that the distal end portions of the plurality of second protruding portions 60 are bent in directions away from each other (radial directions). Thus, the impact acting on the battery pack 1 can be suppressed from acting on the secondary battery 31 via the first protruding portion 40. Thus, impact resistance of the battery pack 1 can be improved.

In this case, a line of action of the impact acting on the battery unit 30 coincides with the virtual line VL corresponding to the center axis of the first protruding portion 40. Since the first protruding portion 40 is located at the bottom of the groove portion G as described above, the impact mainly acts on the bottom of the groove portion G. As described above, the bottom of the groove portion G and the first protruding portion 40 are located between the center axes 31a of the two secondary batteries 31 adjacent to each other in the parallel direction (X direction) of the secondary battery 31 in plan view viewed along the extending direction of the virtual line VL. Thus, the impact acting on the battery unit 30 acts on a portion away from the center axis 31a in the secondary battery 31. Therefore, the impact acting on the secondary battery 31 can be further suppressed.

Next, a case will be described in which the battery pack 1 falls in a posture in which directions inclined with the X direction, the Y direction, and the Z direction coincide with the vertical direction, and the top surface 10a of the case 10 (that is, the outer surface of the upper wall 11a) faces the opposite side to the floor surface, and a portion of the outer surface of the case 10 other than the top surface 10a hits the floor surface.

In this case, when the battery pack 1 hits the floor surface, the battery unit 30 approaches the portion of the outer surface of the case 10 that hits the floor surface. At this time, the first protruding portion 40 presses the inclined surface 61 of at least one of the plurality of second protruding portions 60. As a result, the at least one second protruding portion 60 is elastically deformed. Thus, the impact acting on the battery pack 1 can be suppressed from acting on the secondary battery 31 via the first protruding portion 40.

When the battery unit 30 approaches a portion of the outer surface of the case 10 when the battery pack 1 hits the floor surface, the outer surface of the holder 34 may hit an inner surface of the case 10. When the outer surface of the holder 34 hits the inner surface of the case 10, the impact acting on the battery unit 30 and the secondary battery 31 is suppressed by the elastic deformation of the second protruding portion 60. By making a gap between the outer surface of the holder 34 and the inner surface of the case 10 larger than a movement amount of the battery unit 30 corresponding to a deformation amount of the second protruding portion 60, the outer surface of the holder 34 hits the inner surface of the case 10, and it is possible to suppress action of an impact on the battery unit 30 and the secondary battery 31.

As described above, the plurality of second protruding portions 60 arranged on the lower wall 12a are located in mutually different radial directions about the virtual line VL in plan view viewed along the extending direction of the virtual line VL, so that when the battery pack 1 falls in a posture in which the top surface 10a of the case 10 faces the opposite side to the floor surface, the first protruding portion 40 presses at least one second protruding portion 60. As a result, at least one of the plurality of second protruding portions 60 is elastically deformed. Thus, the impact acting on the battery pack 1 can be suppressed from acting on the secondary battery 31 via the first protruding portion 40.

As described above, the plurality of second protruding portions 60 are located at equal intervals in the peripheral direction of the virtual circle VC centered on the virtual line VL in plan view viewed along the extending direction of the virtual line VL. In addition, the contact portion T of the second protruding portion 60 in contact with the distal end portion of the first protruding portion 40 is located on the virtual circle VC in plan view viewed along the extending direction of the virtual line VL. The second protruding portion 60 has the inclined surface 61, and is in contact with the peripheral edge portion of the distal end portion of the columnar first protruding portion 40 at the inclined surface 61. Thus, when the battery pack 1 falls in the posture in which the top surface 10a of the case 10 faces the opposite side to the floor surface, the first protruding portion 40 reliably presses at least one second protruding portion 60. Accordingly, the impact acting on the battery pack 1 can be reliably suppressed from acting on the secondary battery 31 via the first protruding portion 40.

### <Second embodiment>

Next, a difference of a battery pack 1 according to a second embodiment of the present disclosure from the battery pack 1 according to the first embodiment will be mainly described.

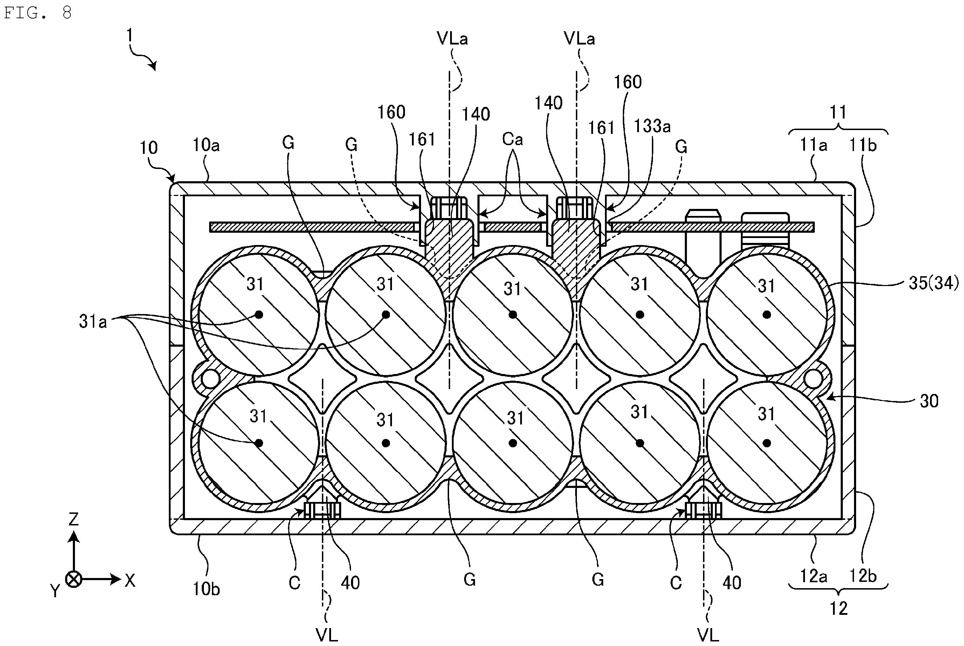

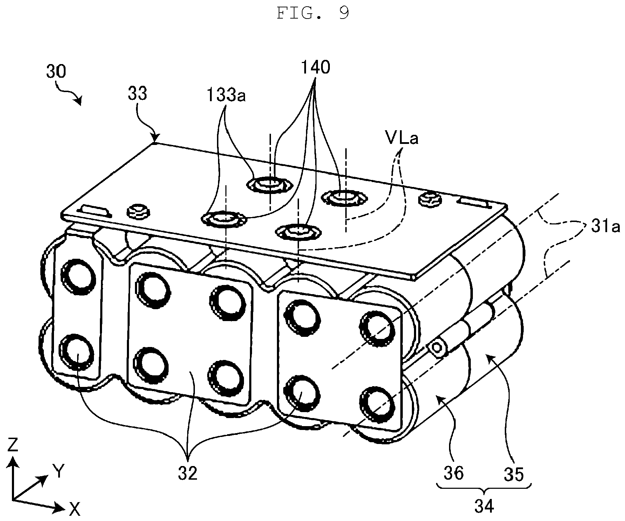

FIG. 8 is a sectional view of the battery pack 1 according to the second embodiment of the present disclosure. FIG. 9 is a perspective view of a battery unit 30 illustrated in FIG. 8. A case 10 of the second embodiment does not include the pair of plate portions 11a1 of the first embodiment (see FIG. 8) .

In the second embodiment, a holder 34 further integrally includes a second first protruding portion 140. The second first protruding portion 140 is located on the outer surface of the holder 34 facing an upper wall 11a. That is, the second first protruding portion 140 and a first protruding portion 40 are located on opposite sides of a secondary battery 31.

The second first protruding portion 140 protrudes along a second virtual line VLa extending from a first holder portion 35 toward the upper wall 11a of a second case portion 12. The second virtual line VLa is orthogonal to the center axis 31a of the secondary battery 31 and parallel to the Z direction. That is, a virtual line VL and the second virtual line VLa are parallel to each other. Note that the virtual line VL and the second virtual line VLa may be inclined to each other.

The second first protruding portion 140 has a columnar shape with the second virtual line VLa as the center axis. The second first protruding portion 140 has the same shape as the first protruding portion 40 except that the second first protruding portion 140 has a columnar shape larger than the first protruding portion 40. That is, the second first protruding portion 140 and the first protruding portion 40 have shapes similar to each other. The second first protruding portion 140 may have the same shape as the first protruding portion 40.

There are a plurality of (specifically, four) the second first protruding portions 140, and the second first protruding portions 140 are located at the bottom of the groove portion G of the holder 34. The plurality of second first protruding portions 140 are located between the plurality of first protruding portions 40 in the parallel direction of the secondary battery 31 (the X direction in the second embodiment). A control board 33 has a through hole 133a through which the second first protruding portion 140 passes.

In addition, in the second embodiment, the case 10 further integrally includes a second set of second protruding portions Ca. The second set of second protruding portions Ca is located on the upper wall 11a of the first case portion 11. That is, the second set of second protruding portions Ca and the set of second protruding portions C are located on opposite sides of a secondary battery 31.

The second set of second protruding portions Ca supports the second first protruding portion 140 in a state of being in contact with a distal end portion of the second first protruding portion 140. The number of the second set of second protruding portions Ca is equal to the number of the second first protruding portions 140. The second set of second protruding portions Ca includes a plurality of (three or more: five in the second embodiment) the second second protruding portions 160. The second second protruding portion 160 has the same shape as the second protruding portion 60 except that the second second protruding portion 160 is larger than the second protruding portion 60, and has a second inclined surface 161. That is, the second second protruding portion 160 and the second protruding portion 60 have shapes similar to each other. The second second protruding portion 160 may have the same shape as the second protruding portion 60. Similarly to the second protruding portion 60, the second second protruding portion 160 is elastically deformable.

The number of the second second protruding portions 160 included in the second set of second protruding portions Ca is equal to the number of the second protruding portions 60 included in the set of second protruding portions C. Similarly to the plurality of second protruding portions 60, the plurality of second second protruding portions 160 surround the second first protruding portion 140 and are located in mutually different radial directions about the second virtual line VLa in plan view viewed along the extending direction of the second virtual line VLa.

In each of the plurality of second second protruding portions 160, the second inclined surface 161 and the distal end portion of the second first protruding portion 140 are in contact with each other. The second second protruding portion 160 in a deformed (that is, elastically deformed) state supports the second first protruding portion 140. That is, similarly to the second protruding portion 60, the second inclined surface 161 and the second first protruding portion 140 are in contact with each other in the state where the second second protruding portion 160 is elastically deformed.

As a result, in a state where the holder 34 is housed in the case 10, the first protruding portion 40 presses the set of second protruding portions C, and the second first protruding portion 140 presses the second set of second protruding portions Ca. That is, the plurality of second protruding portions 60 are elastically deformed to be bent by being pressed by the first protruding portion 40, and the plurality of second second protruding portions 160 are elastically deformed to be bent by being pressed by the second first protruding portion 140.

By supporting the second first protruding portion 140 in a state where the second second protruding portion 160 is in contact with the distal end portion of the second first protruding portion 140 in this manner, generation of abnormal noise can be suppressed. Since the second second protruding portion 160 in the deformed state supports the second first protruding portion 140, the second second protruding portion 160 and the distal end portion of the second first protruding portion 140 can be reliably brought into contact with each other when there is an individual difference (so-called dimensional variation) in sizes of the holder 34 and the case 10.

Next, the operation of the battery pack 1 of the second embodiment when an impact acts on the battery pack 1 will be described.

First, a case where the Z direction and the vertical direction coincide with each other, the battery pack 1 falls in a posture in which a bottom surface 10b of the case 10 faces the opposite side to a floor surface, and a top surface 10a of the case 10 hits the floor surface will be described.

In this case, when the battery pack 1 hits the floor surface, the battery unit 30 approaches the upper wall 11a in the Z direction, that is, along the second virtual line VLa. At this time, the second first protruding portion 140 presses all the second inclined surfaces 161 of the plurality of second second protruding portions 160. As a result, each of the plurality of second second protruding portions 160 is elastically deformed such that the distal end portions of the plurality of second second protruding portions 160 are bent in directions away from each other (radial directions). Thus, the impact acting on the battery pack 1 can be suppressed from acting on the secondary battery 31 via the second first protruding portion 140. Thus, impact resistance of the battery pack 1 can be improved.

In this case, a line of action of the impact acting on the battery unit 30 coincides with the second virtual line VLa corresponding to the center axis of the second first protruding portion 140. Since the second first protruding portion 140 is located at the bottom of the groove portion G, the impact mainly acts on the bottom of the groove portion G. The bottom of the groove portion G and the second first protruding portion 140 are located between the center axes 31a of the two secondary batteries 31 adjacent to each other in the parallel direction (X direction) of the secondary battery 31 in plan view viewed along the extending direction of the second virtual line VLa. Thus, the impact acting on the battery unit 30 acts on a portion away from the center axis 31a in the secondary battery 31. Therefore, the impact acting on the secondary battery 31 can be further suppressed.

Next, a case will be described in which the battery pack 1 falls in a posture in which directions inclined with the X direction, the Y direction, and the Z direction coincide with the vertical direction, and the bottom surface 10b of the case 10 faces the opposite side to the floor surface, and a portion of the outer surface of the case 10 other than the bottom surface 10b hits the floor surface.

In this case, when the battery pack 1 hits the floor surface, the battery unit 30 approaches the portion of the outer surface of the case 10 that hits the floor surface. At this time, the second first protruding portion 140 presses the second inclined surface 161 of at least one of the plurality of second second protruding portions 160. As a result, the at least one second second protruding portion 160 is elastically deformed. Thus, the impact acting on the battery pack 1 can be suppressed from acting on the secondary battery 31 via the second first protruding portion 140.

When the battery pack 1 falls in a posture in which the top surface 10a of the case 10 faces the opposite side to the floor surface, the first protruding portion 40 presses at least one second protruding portion 60 as in the first embodiment. As a result, at least one of the plurality of second protruding portions 60 is elastically deformed. Thus, the impact acting on the battery pack 1 can be suppressed from acting on the secondary battery 31 via the first protruding portion 40 as in the first embodiment.

As described above, in the second embodiment, the plurality of second protruding portions 60 arranged on the lower wall 12a are located in mutually different radial directions about the virtual line VL in plan view viewed along the extending direction of the virtual line VL, and the plurality of second second protruding portions 160 arranged on the upper wall 11a are located in mutually different radial directions about the second virtual line VLa in plan view viewed along the extending direction of the second virtual line VLa. Thus, when the battery pack 1 falls in the posture in which the top surface 10a of the case 10 faces the opposite side to the floor surface and a portion of the outer surface of the case 10 other than the top surface 10a hits the floor surface, the first protruding portion 40 presses at least one second protruding portion 60, and the at least one second protruding portion 60 is elastically deformed. When the battery pack 1 falls in the posture in which the bottom surface 10b of the case 10 faces the opposite side to the floor surface and the portion of the outer surface of the case 10 other than the bottom surface 10b hits the floor surface, the second first protruding portion 140 presses at least one second second protruding portion 160, and the at least one second second protruding portion 160 is elastically deformed. Thus, the impact acting on the battery pack 1 can be suppressed from acting on the secondary battery 31 via the first protruding portion 40 and the second first protruding portion 140.

### <Modification>

Next, with respect to the battery pack 1 according to a modification of each embodiment described above, portions different from the battery pack 1 according to each embodiment described above will be mainly described.

For example, the first protruding portion 40 and the second first protruding portion 140 may be located on the outer surface of the first holder portion 35 facing the first side wall 11b or the second side wall 12b on the outer surface of the holder 34. In this case, the virtual line VL and the second virtual line VLa are orthogonal to the Z direction. In this case, the set of second protruding portions C and the second set of second protruding portions Ca are located on the first side wall 11b or the second side wall 12b.

The first holder portion 35 and the second holder portion 36 may have different shapes. In this case, the numbers of the first protruding portions 40 and the second first protruding portions 140 located in the first holder portion 35 and the numbers of the first protruding portions 40 and the second first protruding portions 140 located in the second holder portion 36 may be different from each other.

The first protruding portion 40 and the second first protruding portion 140 may be arranged on the case 10. In this case, the second protruding portion 60 and the second second protruding portion 160 are arranged on the holder 34.

The first protruding portion 40 and the second first protruding portion 140 may have a prismatic shape with the virtual line VL as the center axis. In this case, the sectional shape of the first protruding portion 40 and the sectional shape of the second first protruding portion 140 when cut along the plane orthogonal to the virtual line VL are preferably polygonal shapes having six or more sides.

The entire end surfaces of the first protruding portion 40 and the second first protruding portion 140 may be planar. In this case, the peripheral edge portions of the distal end portions of the first protruding portion 40 and the second first protruding portion 140 have a rectangular section.

The entire end surfaces of the first protruding portion 40 and the second first protruding portion 140 may be curved surfaces (for example, hemispherical surfaces).

The plurality of second protruding portions 60 and the plurality of second second protruding portions 160 may be located at equal intervals or at different intervals in the peripheral direction of the virtual circle centered on the virtual line VL and the second virtual line VLa in plan view viewed along the extending direction of the virtual line VL and the second virtual line VLa.

The contact portions T of the plurality of second protruding portions 60 in contact with the distal end portion of the first protruding portion 40 may be located at positions deviated from the virtual circle VC centered on the virtual line VL in plan view viewed along the extending direction of the virtual line VL. In addition, contact portions of the plurality of second second protruding portions 160 in contact with the distal end portion of the second first protruding portion 140 may be located on a virtual circle centered on the second virtual line VLa or at a position deviated from the virtual circle in plan view viewed along the extending direction of the second virtual line VLa.

The second protruding portion 60 may have a prismatic shape without the inclined surface 61. In this case, the distal end portion of the first protruding portion 40 may have a conical shape, and the side surface (conical surface) of the distal end portion of the first protruding portion 40 and a peripheral edge of a distal end surface of the second protruding portion 60 are in contact with each other. Similarly, the second second protruding portion 160 may have a prismatic shape without the second inclined surface 161, and the distal end portion of the second first protruding portion 140 may have a conical shape.

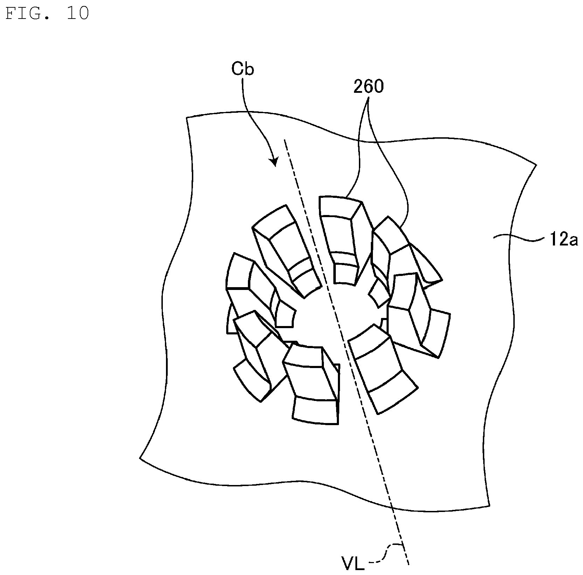

FIG. 10 is a perspective view of a set of second protruding portions Cb in the battery pack 1 according to a first modification of the first embodiment of the present disclosure.

The number of second protruding portions 260 included in the set of second protruding portions Cb of the first modification is an even number, that is, eight. In plan view viewed along the extending direction of the virtual line VL, the plurality of second protruding portions 260 are located at equal intervals in the peripheral direction of the virtual circle centered on the virtual line VL, so that the set of second protruding portions Cb has a line-symmetrical shape having, as an axis of symmetry, a line parallel to any one of the center axis 31a of the secondary battery 31 and the parallel direction (X direction) of the secondary battery 31. Furthermore, in plan view viewed along the extending direction of the virtual line VL, the set of second protruding portions Cb has a point symmetrical shape with the virtual line VL as a center of symmetry. In the second set of second protruding portions Ca of the second embodiment, the number of the second second protruding portions 160 may be an even number.

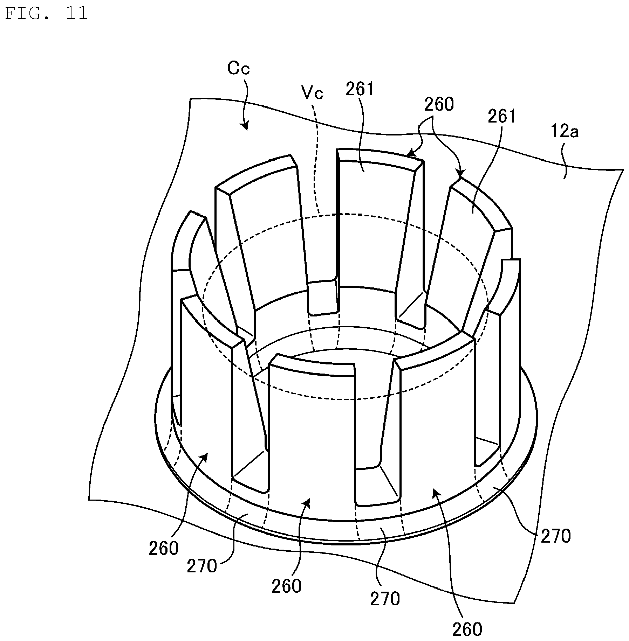

FIG. 11 is a perspective view of a set of second protruding portions Cc in the battery pack 1 according to a second modification of the first embodiment of the present disclosure.

The battery pack 1 of the second modification further includes a plurality of third protruding portions 270 that connect proximal end portions of the two second protruding portions 260 adjacent to each other in the circumferential direction of the virtual circle VC in the set of second protruding portion Cc. The third protruding portion 270 protrudes from the lower wall 12a. The third protruding portion 270 is located on the proximal end side of the second protruding portion 260 with respect to an inclined surface 261. The plurality of second protruding portions 260 and the plurality of third protruding portions 270 are integrated. The strength of the proximal end portion of the second protruding portion 260 can be improved by the plurality of third protruding portions 270. Thus, it is possible to suppress damage of the proximal end portion of the second protruding portion 260 when the second protruding portion 260 is pressed by the first protruding portion 40.

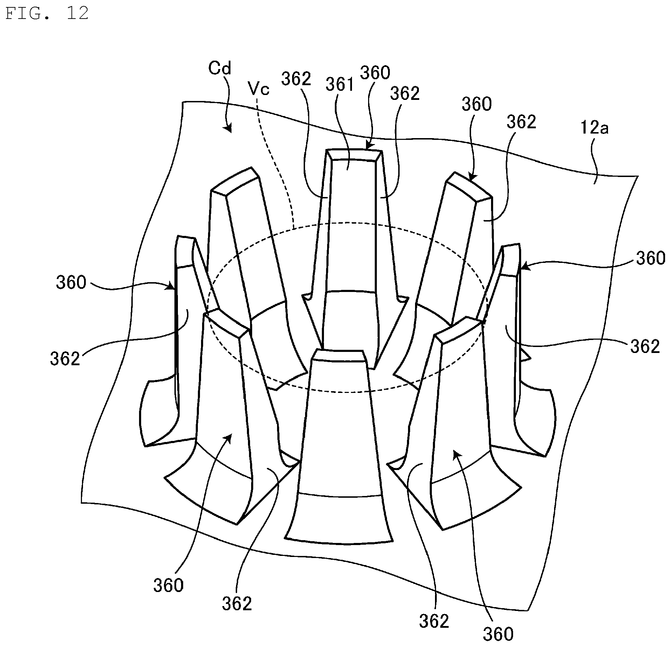

FIG. 12 is a perspective view of a set of second protruding portions Cd in the battery pack 1 according to a third modification of the first embodiment of the present disclosure.

In the battery pack 1 of the third modification, side surfaces 362 on both sides in the peripheral direction of the virtual circle VC in a second protruding portion 360 of the set of second protruding portions Cd are tapered surfaces. The side surface 362 is inclined such that the width of the second protruding portion 360 in the peripheral direction of the virtual circle VC decreases from the proximal end toward the distal end of the second protruding portion 360. Since the second protruding portion 360 has the side surface 362, a draft angle of a portion corresponding to the side surface 362 can be increased in a mold used for manufacturing the second case portion 12 having the second protruding portion 360. Thus, the manufacturing of the second case portion 12 can be simplified.

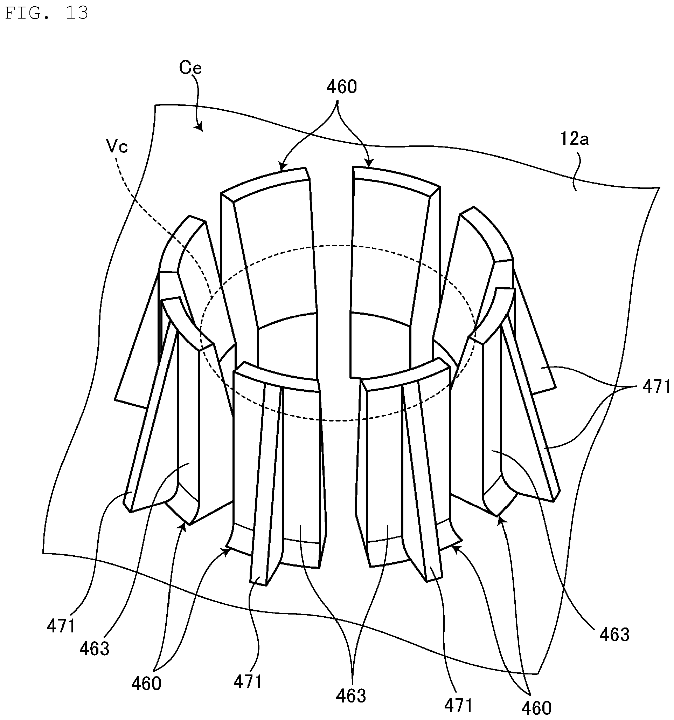

FIG. 13 is a perspective view of a set of second protruding portions Ce in the battery pack 1 according to a fourth modification of the first embodiment of the present disclosure.

The battery pack 1 of the fourth modification further includes a plurality of fourth protruding portions 471 connecting an outer surface 463 facing a radial outside of the virtual circle VC and the lower wall 12a in the second protruding portion 460 of the set of second protruding portions Ce. The rigidity of the second protruding portion 460 is improved by the fourth protruding portion 471. Thus, it is possible to suppress permanent deformation of the second protruding portion 460 when the second protruding portion 460 is pressed by the first protruding portion 40.

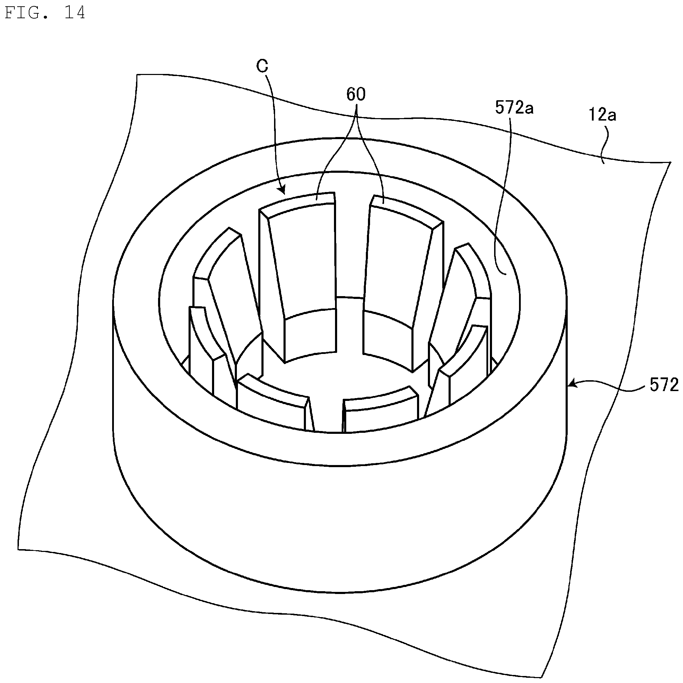

FIG. 14 is a perspective view illustrating a periphery of the set of second protruding portions C in the battery pack 1 according to a fifth modification of the first embodiment of the present disclosure.

The battery pack 1 of the fifth modification further includes a first cylindrical portion 572 in which the set of second protruding portions C is located inside. The first cylindrical portion 572 protrudes from the lower wall 12a. When the second protruding portion 60 is pressed against the first protruding portion 40, a protruding end of the second protruding portion 60 can come into contact with an inner peripheral surface 572a of the first cylindrical portion 572. The shape of the first cylindrical portion 572 is determined such that the deformation of the second protruding portion 60 when the protruding end of the second protruding portion 60 comes into contact with the inner peripheral surface 572a of the first cylindrical portion 572 is elastic deformation. Thus, it is possible to suppress permanent deformation of the second protruding portion 60 when the second protruding portion 60 is pressed by the first protruding portion 40.

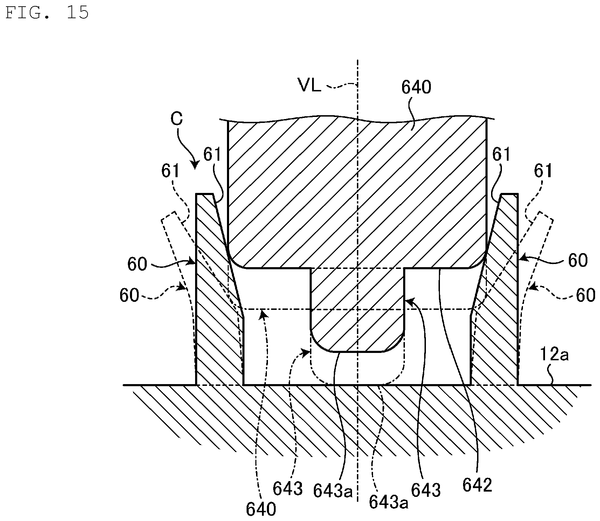

FIG. 15 is a sectional view of a first protruding portion 640 and the set of second protruding portions C in the battery pack 1 according to a sixth modification of the first embodiment of the present disclosure.

The first protruding portion 640 of the sixth modification integrally includes a fifth protruding portion 643 protruding from an end surface 642. The fifth protruding portion 643 has a columnar shape. The diameter of the fifth protruding portion 643 is smaller than the diameter of the first protruding portion 640.

A protruding height of the fifth protruding portion 643 is set to a height at which a protruding end surface 643a of the fifth protruding portion 643 and the lower wall 12a do not come into contact with each other as indicated by a solid line in FIG. 15 in a state where no impact is applied to the battery pack 1. The protruding height of the fifth protruding portion 643 is set to a height at which the peripheral edge portion of the distal end portion of the first protruding portion 640 comes into contact with the inclined surface 61 of the deformed second protruding portion 60 indicated by a broken line when the protruding end surface 643a of the fifth protruding portion 643 and the lower wall 12a come into contact with each other as indicated by a one-dot chain line in FIG. 15 by an impact on the battery pack 1.

In addition, the protruding height of the fifth protruding portion 643 is determined such that when an impact acts on the battery pack 1, the first protruding portion 640 moves along the virtual line VL, and the protruding end surface 643a of the fifth protruding portion 643 and the lower wall 12a come into contact with each other as indicated by a one-dot chain line in FIG. 15, the deformation of the second protruding portion 60 indicated by a broken line is elastic deformation. Thus, it is possible to suppress permanent deformation of the second protruding portion 60 when the second protruding portion 60 is pressed by the first protruding portion 640.

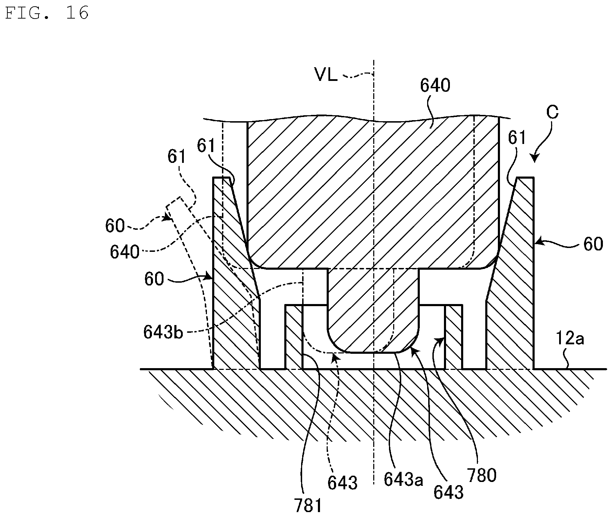

FIG. 16 is a sectional view illustrating a periphery of the set of second protruding portions C in the battery pack 1 according to a seventh modification of the first embodiment of the present disclosure.

The battery pack of the seventh modification further includes the fifth protruding portion 643 of the first protruding portion 640 and a second cylindrical portion 780 of the sixth modification.

The second cylindrical portion 780 protrudes from the lower wall 12a. The second cylindrical portion 780 is located inside the set of second protruding portions C. The fifth protruding portion 643 is located inside the second cylindrical portion 780.

The protruding height of the second cylindrical portion 780 is set to a height at which the first protruding portion 640 and the second cylindrical portion 780 do not come into contact with each other when the protruding end surface 643a of the fifth protruding portion 643 and the lower wall 12a come into contact with each other.

In addition, a diameter of an inner peripheral surface 781 of the second cylindrical portion 780 is determined such that when an impact acts on the battery pack 1, the first protruding portion 640 moves along the direction orthogonal to the virtual line VL, and a circumferential surface 643b of the fifth protruding portion 643 and the inner peripheral surface 781 come into contact with each other as indicated by a broken line in FIG. 16, the deformation of the second protruding portion 60 indicated by a one-dot chain line in FIG. 16 is elastic deformation. Thus, it is possible to suppress permanent deformation of the second protruding portion 60 when the second protruding portion 60 is pressed by the first protruding portion 640.

Also in the battery pack 1 according to the modification of each of the above embodiments, similarly to the battery pack 1 according to each of the above embodiments, it is possible to suppress the impact acting on the battery pack 1 from acting on the secondary battery 31 via the first protruding portions 40 and 640 and the second first protruding portion 140. Thus, impact resistance of the battery pack 1 can be improved.

Note that the embodiments described above are intended to facilitate understanding of the present disclosure, but not intended to construe the present disclosure in any limited way. The present disclosure may be modified/improved without departing from the spirit thereof, and the present disclosure includes equivalents thereof.

The present disclosure may be a combination of the following configurations.
(1) A battery pack including:
   a plurality of secondary batteries that are cylindrical;
   a holder that holds the plurality of secondary batteries; and
   a case that houses the holder,
   wherein
   one of the case and the holder includes a first protruding portion that protrudes along a virtual line extending from one of the case and the holder toward the other of the case and the holder,
   the other of the case and the holder supports the first protruding portion in a state of being in contact with a distal end portion of the first protruding portion, and includes three or more second protruding portions that are elastically deformable, and
   the three or more second protruding portions surround the first protruding portion in plan view viewed along an extending direction of the virtual line.
(2) The battery pack according to (1), wherein the three or more second protruding portions are located at equal intervals in a peripheral direction of a virtual circle centered on the virtual line in plan view viewed along the extending direction of the virtual line.
(3) The battery pack according to (2), wherein a contact portion of the three or more second protruding portions in contact with the distal end portion of the first protruding portion is located on the virtual circle in plan view viewed along the extending direction of the virtual line.
(4) The battery pack according to any one of (1) to (3), wherein the three or more second protruding portions have an inclined surface that is inclined in a direction in which the inclined surface is increasingly away from the virtual line from a proximal end side toward a distal end side of the second protruding portion, and is in contact with the distal end portion of the first protruding portion.
(5) The battery pack according to any one of (1) to (4), wherein the three or more second protruding portions in a deformed state support the first protruding portion.
(6) The battery pack according to any one of (1) to (5), wherein
   the first protruding portion has a columnar shape, and
   the three or more second protruding portions are in contact with a peripheral edge portion of the distal end portion of the first protruding portion.
(7) The battery pack according to any one of (1) to (6), wherein
   the holder holds the plurality of secondary batteries in a state where the plurality of secondary batteries are arranged in parallel, and
   the first protruding portion is located between center axes of two of the secondary batteries adjacent to each other in a parallel direction of the secondary batteries in plan view viewed along the extending direction of the virtual line.
(8) A battery pack according to any one of (1) to (7), wherein
   one of the case and the holder further includes a second first protruding portion that protrudes along a second virtual line extending from one of the case and the holder toward the other of the case and the holder, and is located on an opposite side of the first protruding portion across the secondary battery,
   the other of the case and the holder supports the second first protruding portion in a state of being in contact with a distal end portion of the second first protruding portion, and includes three or more second second protruding portions that are elastically deformable, and
   the three or more second second protruding portions surround the second first protruding portion in plan view viewed along an extending direction of the second virtual line.

## Claims

1. A battery pack comprising:
a plurality of secondary batteries that are cylindrical;
a holder that holds the plurality of secondary batteries; and
a case that houses the holder,
wherein
one of the case and the holder includes a first protruding portion that protrudes along a virtual line extending from one of the case and the holder toward the other of the case and the holder,
the other of the case and the holder supports the first protruding portion in a state of being in contact with a distal end portion of the first protruding portion, and includes three or more second protruding portions that are elastically deformable, and
the three or more second protruding portions surround the first protruding portion in plan view viewed along an extending direction of the virtual line.

2. The battery pack according to claim 1, wherein the three or more second protruding portions are located at equal intervals in a peripheral direction of a virtual circle centered on the virtual line in plan view viewed along the extending direction of the virtual line.

3. The battery pack according to claim 2, wherein a contact portion of the three or more second protruding portions in contact with the distal end portion of the first protruding portion is located on the virtual circle in plan view viewed along the extending direction of the virtual line.

4. The battery pack according to claim 1, wherein the three or more second protruding portions have an inclined surface that is inclined in a direction in which the inclined surface is increasingly away from the virtual line from a proximal end side toward a distal end side of the second protruding portion, and is in contact with the distal end portion of the first protruding portion.

5. The battery pack according to claim 1, wherein the three or more second protruding portions in a deformed state support the first protruding portion.

6. The battery pack according to claim 1, wherein
the first protruding portion has a columnar shape, and the three or more second protruding portions are in contact with a peripheral edge portion of the distal end portion of the first protruding portion.

7. The battery pack according to claim 1, wherein
the holder holds the plurality of secondary batteries in a state where the plurality of secondary batteries are arranged in parallel, and
the first protruding portion is located between center axes of two of the secondary batteries adjacent to each other in a parallel direction of the secondary batteries in plan view viewed along the extending direction of the virtual line.

8. The battery pack according to claim 1, wherein
one of the case and the holder further includes a second first protruding portion that protrudes along a second virtual line extending from one of the case and the holder toward the other of the case and the holder, and is located on an opposite side of the first protruding portion across the secondary battery,
the other of the case and the holder supports the second first protruding portion in a state of being in contact with a distal end portion of the second first protruding portion, and includes three or more second second protruding portions that are elastically deformable, and
the three or more second second protruding portions surround the second first protruding portion in plan view viewed along an extending direction of the second virtual line.
